# EUROPÄISCHE PATENTANMELDUNG

(11) **EP 4 622 224 A1**
(43) Veröffentlichungstag der Anmeldung: **24.09.2025**
(21) Anmeldenummer: 24164157.0
(22) Anmeldetag: 18.03.2024
(51) Int. Cl.: H04L 67/55, H04L 41/50, H04L 41/16

(54) **VERFAHREN ZUM BETREIBEN VON DATENZENTRISCHEN APPLIKATIONEN IN EINEM GERÄTENETZWERK UND GERÄTENETZWERK**

(71) Anmelder: Siemens Aktiengesellschaft, 80333 München (DE)
(72) Erfinder: Sauer, Markus, 81739 München (DE); Sedlacek, Matous, 84034 Landshut (DE)
(74) Vertreter: Siemens Patent Attorneys

(57) **Zusammenfassung**

Die Erfindung betrifft ein Verfahren zum rechnergestützten Betreiben von mindestens einer verteilten datenzentrischen Applikation (APP) in einem Gerätenetzwerk (GENW) mit mehreren mittels Datenverbindungen (V) miteinander verbundenen Knoten (K) mittels Publish-Subscribe-Kommunikation. In dem erfindungsgemäßen Verfahren wird jeweils zumindest ein Kommunikationsprofil der Publish-Subscribe-Kommunikation der jeweiligen Knoten (K) und eine von dem Gerätenetzwerk (GENW) abhängige Datenfluss-Qualität für die Kommunikation der Applikation (APP) ermittelt. Ferner wird aus dem Kommunikationsprofil der Knoten (K) und der Datenfluss-Qualität für die Kommunikation der Applikation (APP) ein Mengengerüst (MG) für die Kommunikation über Publish-Verbindungen einer oder mehrerer der Datenverbindungen (V) der Knoten (K) erzeugt und abhängig von dem Mengengerüst (MG) wird die Kommunikation über die Publish-Verbindungen einer oder mehrerer der Datenverbindungen (V) der Knoten (K) gesteuert, bei der die Datenfluss-Qualität der Applikation (APP) gewährleistet wird.

## Beschreibung

Die Erfindung betrifft ein Verfahren zum Betreiben von datenzentrischen Applikationen in einem Gerätenetzwerk und ein Gerätenetzwerk.

Bei industriellen softwarebasierten verteilten Applikationen in industriellen Gerätenetzwerken werden Geräte oft nur lose miteinander verbunden, weil die Kommunikation von Teilen der Applikation daten-zentriert erfolgt, insbesondere jeweils mittels brokerbasierter und/oder brokerloser Publish-Subscribe-Kommunikation realisiert wird. Bekannte Beispiele für Publish-Subscribe-Kommunikation nutzen den brokerbasierten MQTT-Standard (MQTT = (englisch) "Message Queuing Telemetrie Transport"), wie er im Wikipedia-Artikel zu MQTT (https://en.wikipedia.org/wiki/MQTT) beschrieben wird. Andere Beispiele nutzen den DDS-Standard (DDS = (englisch) "Data Distribution Service") der Objekt Management Group (OMG).

Industrielle Anwendungen erfordern typischerweise Kommunikationskanäle mit je einer bestimmten Datenfluss-Qualität, im Englischen auch als "Quality-of-Service" (QoS) bezeichnet. Solche Datenfluss-Qualitäten umfassen, neben einer Vielzahl von Möglichkeiten, insbesondere eine vorgegebene Latenz, eine vorgegebene Verlässlichkeit und/oder eine vorgegebene Übermittlungsfrist. Insbesondere in der industriellen Automatisierungstechnik, in der SCADA-Domäne, im Militär, der Mobilität oder 5G oder 6G sind solche Datenfluss-Qualitäten relevant.

Bislang wird zur Realisierung vorgegebener Datenfluss-Qualitäten das jeweils unterliegende Gerätenetzwerk hinsichtlich der Netzwerkressourcen vergleichsweise groß dimensioniert gewählt. Dies ist allerdings nicht in jedem Anwendungsfall praktikabel und nicht bei jeder in der Praxis auftretenden Netzwerklast hinreichend.

Bis heute gibt es keine Möglichkeit, ein automatisches Ende-zu-Ende-QoS-Setup von höheren Anwendungsschichten des OSI-Referenzmodells (sog. OSI-Schichten) gekoppelt an die unteren Netzwerkschichten mit deterministischen Garantien wie bei 5G oder 6G oder TSN-Netzwerken bereitzustellen.

Es ist daher Aufgabe der Erfindung, ein vor dem Hintergrund des Standes der Technik verbessertes Verfahren zum Betreiben von datenzentrischen Applikationen in einem Gerätenetzwerk anzugeben, mit dem Komponenten zur Verkehrsgestaltung in der deterministischen Kommunikation Informationen erhalten können, die für den Netzwerkdatenverkehr erforderlich sind. Es ist zudem Aufgabe der Erfindung, ein verbessertes Gerätenetzwerk zu schaffen, mit welchem das verbesserte Verfahren ausgeführt werden kann.

Diese Aufgabe der Erfindung wird mit einem Verfahren zum Betreiben mindestens einer datenzentrischen Applikation in einem Gerätenetzwerk mit mehreren Knoten mit den in Anspruch 1 angegebenen Merkmalen sowie mit einem Gerätenetzwerk mit den in Anspruch 11 angegebenen Merkmalen gelöst. Bevorzugte Weiterbildungen der Erfindung sind in den zugehörigen Unteransprüchen, der nachfolgenden Beschreibung und der Zeichnung angegeben.

Bei dem erfindungsgemäßen Verfahren zum rechnergestützten Betreiben von mindestens einer verteilten datenzentrischen Applikation in einem Gerätenetzwerk mit mehreren mittels Datenverbindungen miteinander verbundenen Knoten mittels Publish-Subscribe-Kommunikation werden jeweils zumindest ein Kommunikationsprofil der Publish-Subscribe-Kommunikation der jeweiligen Knoten und eine von dem Gerätenetzwerk abhängige Datenfluss-Qualität für die Kommunikation der Applikation ermittelt. Aus dem Kommunikationsprofil der Knoten und der Datenfluss-Qualität für die Kommunikation der Applikation wird ein Mengengerüst für die Kommunikation über Publish-Verbindungen einer oder mehrerer der Datenverbindungen der Knoten erzeugt. Schließlich wird abhängig von dem Mengengerüst die Kommunikation über die Publish-Verbindungen einer oder mehrerer der Datenverbindungen der Knoten so gesteuert, dass die Datenfluss-Qualität der Applikation gewährleistet wird.

Mittels des erfindungsgemäßen Verfahrens werden also einerseits Kommunikationsprofile der unterschiedlichen Kommunikationsströme der Publish-Subscribe-Kommunikation, der mindestens eine Applikation erfasst, wobei die Publish-Subscribe-Kommunikation die Kommunikation unterschiedlicher Teile der verteilten Applikationen miteinander reflektiert, gegebenenfalls auf unterschiedlichen Geräten. Andererseits werden auch die von dem Gerätenetzwerk, insbesondere den Datenverbindungen, abhängigen Datenfluss-Qualitäten der Applikation zwischen verschiedenen Knoten ermittelt. Das Kommunikationsprofil der Knoten wird dazu genutzt, ein Mengengerüst für die Kommunikation zu erzeugen. Dabei wird ausschließlich derjenigen Kommunikation berücksichtigt, welche über Publish-Verbindungen der Datenverbindungen erzeugt wird. Die Steuerung der Publish-Verbindungen einer oder mehrerer der Datenverbindungen der Knoten erfolgt dann in Abhängigkeit der ermittelten Mengengerüste, wobei die Datenfluss-Qualität der Applikation zwischen den beteiligten Knoten berücksichtigt und damit gewährleistet wird.

Das Mengengerüst kann beispielsweise in einem sogenannten Traffic Shaper - einer Verkehrsgestaltungskomponente einer Middleware eines jeweiligen Knotens - verarbeitet werden, welche z.B. in 5G oder TSN verwendet werden. Auf der Grundlage von Subskriptions- und Publikation-Ereignissen im Subskriptionsmanagement aller Publish-Subscribe-Komponenten kann die in der Middleware definierte Datenfluss-Qualität (QoS) genutzt werden, um das Mengengerüst zu berechnen, das die Bereitstellung garantierter Kommunikationseigenschaften sicherstellt. Dies führt dazu, dass eine bestehende Traffic-Shaping-Komponente die Netzwerkkonfiguration und den entsprechenden Betrieb für eine deterministische Kommunikation vorbereiten kann.

In anderen Worten bedeutet dies, dass das Mengengerüst sich auf das "Overlay Netz der Application" (Layer 7) bezieht, welches Kommunikationsprofile und QoS Parameter der Publish-Subscribe-Kommunikation beinhaltet. Das Traffic Shaping stellt dann die Parameter der Datenfluss-Qualität (QoS Parameter) des Gerätenetzwerks (Netzwerk-Layer 1-4) durch das Traffic Shaping sicher. Dies bedeutet, dass es Datenfluss-Qualität (QoS Parameter) auf zwei Ebenen gibt.

Darüber hinaus können kontinuierlich analysierte Mengengerüste für Kommunikationsflüsse (ohne Einschränkung auf System- und auch Anwendungsebene) in Kombination mit den QoS-Parametern, wie sie von der Anwendung über die Middleware für jeden Kommunikationsfluss definiert wurden, dazu verwendet werden, den an das Gerätenetzwerk gesendeten Datenverkehr so zu gestalten, dass er sowohl das deterministische Verhalten des Gerätenetzwerks unterstützt als auch die definierte Datenfluss-Qualität einhält.

In einer zweckmäßigen Ausgestaltung umfasst die Steuerung der Kommunikation der Publish-Verbindung einer jeweiligen Datenverbindung der Knoten eine Formung des Netzwerkverkehrs, insbesondere durch gezieltes Verzögern des Aussendens von Datenpaketen. Die Formung des Netzwerkverkehrs ist im englischen auch unter "Traffic Shaping" bekannt.

Gemäß einer weiteren zweckmäßigen Ausgestaltung wird das Mengengerüst für das Gerätenetzwerk neu erzeugt, wenn in dem Gerätenetzwerk zumindest ein Knoten entfernt wird oder neu hinzukommt. In einer weiteren zweckmäßigen zusätzlichen oder alternativen Ausgestaltung ist vorgesehen, dass das Mengengerüst für das Gerätenetzwerk neu erzeugt wird, wenn zumindest eine Datenverbindung entfernt wird oder neu hinzukommt. Bei einem "statischen" Gerätenetzwerk, bei dem sich keine Veränderung der miteinander verbundenen Knoten und/oder Datenverbindungen ergibt, ist es demgegenüber ausreichend, wenn das Mengengerüst für das Gerätenetzwerk lediglich einmalig erzeugt wird.

Zweckmäßigerweise umfassen bei dem erfindungsgemäßen Verfahren die Datenverbindungen drahtbasierte Verbindungen und/oder drahtlose Verbindungen, insbesondere 5G- und/oder 6G-Verbindungen. Insbesondere können die Datenverbindungen mehrere oder sämtliche der vorgenannten Verbindungen umfassen. Vorteilhaft können solche Datenverbindungen neu konfiguriert werden, dass die zur Verfügung stehenden Verbindungen hinsichtlich der Publish-Subscribe-Kommunikation optimal genutzt werden.

In einer weiteren vorteilhaften Weiterbildung der Erfindung ist bei dem erfindungsgemäßen Verfahren die Publish-Subscribe-Kommunikation, zumindest zum Teil, gemäß dem DDS-Standard realisiert. Alternativ oder zusätzlich und ebenfalls bevorzugt ist bei dem erfindungsgemäßen Verfahren die Publish-Subscribe-Kommunikation, zumindest zum Teil, gemäß dem MQTT-Standard realisiert.

Gemäß einer weiteren zweckmäßigen Ausgestaltung ist die Datenfluss-Qualität der Applikation eine Ende-zu-Ende-Datenfluss-Qualität der Applikation, wobei eine Kommunikation über eine oder mehrere der Datenverbindungen der Knoten verläuft. Mit anderen Worten ignoriert die Datenfluss-Qualität der Applikation nicht, wie in der Vergangenheit, die zugrunde liegende Netzwerk-Technologie der Verbindungen, sondern berücksichtigt die durch die Verbindungen bereitgestellten Qualitätsmerkmale, so dass die Datenfluss-Qualität der Applikation auch über mehrere Knoten und Verbindungen hinweg gewährleistet werden kann.

Die Kommunikationsprofile können derart erfasst werden, dass die Knoten vorzugsweise zur Ermittlung des Kommunikationsprofils mittels einer Publish-Subscribe-Middleware aufgefordert werden und dass die Knoten zum Senden des Kommunikationsprofils aufgefordert werden. Zu diesem Zweck kann die Publish-Subscribe-Middleware eine Monitoring-Komponente für die Publish-Subscribe-Kommunikation aufweisen.

Eine solche, optionale Monitoring-Komponente erhält diejenigen Daten zur Publish-Subscribe-Kommunikation, die die Nutzung von Publish-Subscribe-Kommunikation des jeweiligen Knotens, auf welchem die Publish-Subscribe-Middleware implementiert ist, charakterisieren. Insbesondere zählen zu diesen Daten die Größe und/oder die Frequenz und/oder Übertragungsrate der jeweils übertragenen Nutzdaten. Diese Daten bilden zusammengenommen jeweils ein Kommunikationsprofil des Knotens hinsichtlich der Publish-Subscribe-Kommunikation. Aus diesen Daten ist das Mengengerüst bestimmbar.

Solche Kommunikationsprofile können auf die Erfordernisse der Datenverbindungen der Knoten miteinander mittels einer Abbildung abgebildet werden. Eine solche Abbildung, etwa in Gestalt einer Abbildungsfunktion und/oder einer Zuordnungstabelle und/oder eines für eine solche Zuordnung trainierten neuronalen Netzes, wird zweckmäßig bei der Erfindung herangezogen. Zweckmäßigerweise können die Kommunikationsprofile derart erfasst werden, dass die Kommunikationsprofile als von den Knoten gesendete Kommunikationsprofile empfangen werden oder dass die Kommunikationsprofile aus dem Knoten ausgelesen werden.

In einer weiteren zweckmäßigen Ausgestaltung der Erfindung wird abhängig von den Kommunikationsprofilen der Knoten ein Kommunikationsmodell des Gerätenetzwerks bestimmt und abhängig von dem Kommunikationsmodell wird das Mengengerüst für die Kommunikation über die Publish-Verbindungen einer oder mehrerer der Datenverbindungen mittels eines neuronalen Netzes bestimmt.

In einer weiteren zweckmäßigen Ausgestaltung bilden die Kommunikationsprofile der Knoten und die Datenfluss-Qualität der Applikation Eingangsdaten für das neuronale Netz. Das neuronale Netz wird zweckmäßig mit Kommunikationsprofilen und vorzugsweise der Datenfluss-Qualität der Applikation trainiert, so dass das neuronale Netz das Mengengerüst für die Kommunikation über die Publish-Verbindungen erzeugen kann, so dass die Datenfluss-Qualität der Applikation gewährleistet wird.

Gemäß einer weiteren zweckmäßigen Ausgestaltung wird ein Computerprogrammprodukt vorgeschlagen, das Befehle umfasst, die bei der Ausführung des Programms durch einen Computer diesen veranlassen, das Verfahren des hierin beschriebenen Verfahrens auszuführen.

Bevorzugt wird das erfindungsgemäße Verfahren kontinuierlich oder wiederholt durchgeführt. Auf diese Weise kann das erfindungsgemäße Verfahren auf Änderungen des Gerätenetzwerks und/oder der zumindest eine Applikation flexibel und zeitnah reagieren.

Gemäß einem weiteren Aspekt wird ein Gerätenetzwerk vorgeschlagen, das Miteinander in Kommunikationsverbindung stehende Knoten umfasst, auf welchen mindestens eine verteilte, mittels Publish-Subscribe-Kommunikation realisierte, datenzentrische Applikation implementiert ist, wobei das Gerätenetzwerk und ein jeweiliger Knoten eine als Hardware und/oder als Software realisierte Analyse- und Konfigurationskomponente aufweist, welche dazu ausgebildet und eingerichtet ist, das wie vorhergehend beschriebene Verfahren auszuführen.

Die Erfindung wird nachfolgend näher anhand in der Zeichnung dargestellter Ausführungsbeispiele näher erläutert.

Es zeigen:
- Fig. 1: eine schematische Darstellung eines gekoppelten Gerätenetzwerks zur datenzentrischen Kommunikation zur Ausführung des erfindungsgemäßen Verfahrens zum Betreiben mindestens einer verteilten Applikation;
- Fig. 2: eine schematische Darstellung eines Knotens des in Fig. 1 gezeigten Gerätenetzwerks;
- Fig. 3: eine schematische Darstellung einer Publish-Subscribe-Middleware, wie diese in dem in Fig. 2 gezeigten Knoten verwendet wird; und
- Fig. 4: eine schematische Darstellung des erfindungsgemäßen Verfahrens zum Betreiben mindestens einer verteilten Applikation.

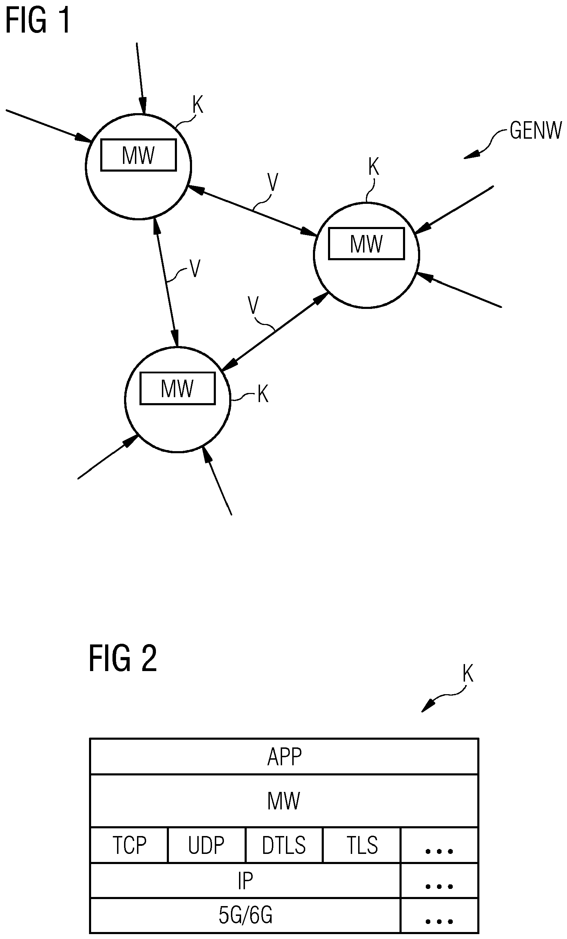

Das in Fig. 1 dargestellte gekoppelte Gerätenetzwerk GENW umfasst mehrere miteinander gekoppelte Geräte, welche Knoten K des Gerätenetzwerks GENW bilden.

Auf dem Gerätenetzwerk GENW werden verteilte Applikationen betrieben, welche jeweils mehrere auf unterschiedlichen Knoten K realisierte Teile der Applikation APP umfassen, die miteinander mittels eines datenzentrischen Kommunikationsverfahrens mit Datenverbindungen V in Verbindung stehen. Im dargestellten Ausführungsbeispiel ist das datenzentrierte Kommunikationsverfahren ein Publish-Subscribe-Verfahren. Die Datenverbindungen V sind im Gerätenetzwerk wahlweise drahtlos, etwa mittels 5G oder 6G, und teilweise drahtgebunden realisiert.

Vorliegend genügt das datenzentrische Publish-Subscribe-Verfahren dem DDS-Standard. In weiteren, nicht gesondert dargestellten Ausführungsbeispielen, welche im Übrigen dem dargestellten Ausführungsbeispiel entsprechen, genügt das datenzentrische Publish-Subscribe-Verfahren dem MQTT-Standard.

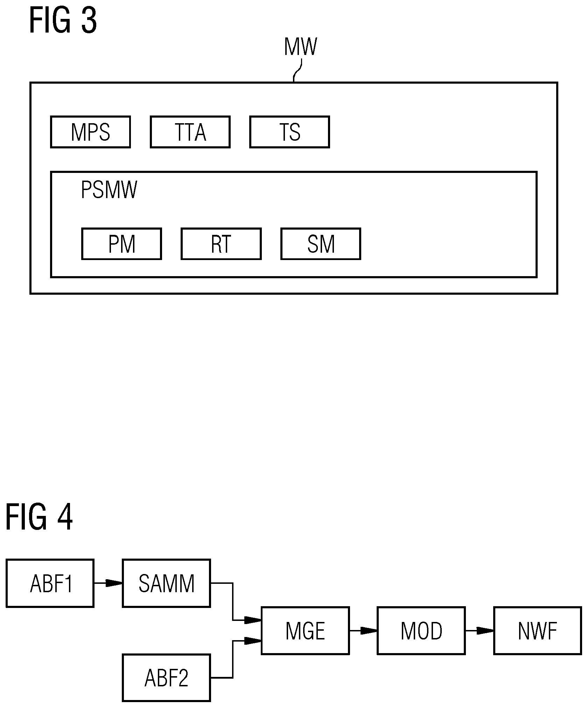

Auf einem jeweiligen Knoten K ist eine Publish-Subscribe-Middleware PSMW als Teil einer Middleware MW implementiert, wie in den Fig. 2 und 3 dargestellt ist. Der Knoten K umfasst eine nicht im Detail gezeigte Verkehrs-Monitor-Komponente, welche das Kommunikationsprofil des jeweiligen Knotens K hinsichtlich der Publish-Subscribe-Kommunikation des Knotens K überwacht. Die Publish-Verbindungen des Knotens K und die Subscribe-Verbindungen des Knotens K werden dazu von der Verkehrs-Monitor-Komponente des jeweiligen Knotens K beobachtet und es wird sowohl der jeweilige Umfang der Publish-Subscribe-Verbindung festgehalten und es werden zudem die Frequenz in der Nutzung der Publish-Subscribe-Kommunikation sowie zeitliche Muster in der Nutzung der Publish-Subscribe-Verbindung von der Verkehrs-Monitoring-Komponente festgehalten.

Das Gerätenetzwerk GENW kann eine Netzwerkanalyse-Komponente umfassen, welche als separate physikalische Komponente ausgebildet sein kann. Die Netzwerkanalyse-Komponente kann alternativ ausgebildet sein, entweder auf einem der Knoten K betrieben zu werden oder verteilt über mehrere Knoten K auf dem Gerätenetzwerk GENW implementiert zu sein. Die Netzwerkanalyse-Komponente steht mit sämtlichen Verkehrs-Monitoring-Komponenten in Datenverbindung und fragt von jedem Knoten K das jeweilige Kommunikationsprofil des Knotens K ab.

Die Netzwerkanalyse-Komponente nimmt die Kommunikationsprofile sämtlicher Knoten K entgegen und berechnet ein Kommunikationsmodell des gesamten Gerätenetzwerks GENW. Das Kommunikationsmodell nimmt zusätzlich die gegenwärtig auf dem Gerätenetzwerk GENW implementierte Konfiguration der Datenverbindungen V der Knoten K miteinander entgegen und berechnet eine optimierte, gegebenenfalls alternative, Konfiguration, um die Publish-Subscribe-Kommunikation hinsichtlich eines Güteparameters zu optimieren. Ein solcher Güteparameter kann etwa in der Erfüllung eines Gesamtmaßes für Datenfluss-Qualitäten in der Art eines Quality-of-Service QoS der Publish-Subscribe-Kommunikation der Applikation APP bestehen.

Die Datenfluss-Qualität der Applikation APP umfasst pro Publish-Subscribe-Verbindung eine Ende-zu-Ende-Datenfluss-Qualität, wobei eine Applikation eine Vielzahl von Publsih-Subscribe-Verbindungen haben kann. Eine jeweilige Kommunikation im Rahmen einer Publish-Subscribe-Verbindung verläuft über eine oder mehrere Datenverbindungen V der Knoten K. zweckmäßigerweise kann es pro Topic einer Publish-Subscribe-Verbindung jeweilige Datenfluss-Qualität (auch als QoS Parameter bezeichnet) geben. Dies bedeutet, es kann pro Applikation APP ein oder mehrere Topics mit Publish-Subscribe-Beziehung geben, wobei es pro Topic einen QoS Parametersatz geben kann. Dadurch entsteht pro Topic ein spezifisches logisches Netz, welches gemäß dem hier beschriebenen Verfahren Ende-zu-Ende optimiert wird. Die Ermittlung der von dem Gerätenetzwerk GENW abhängigen Datenfluss-Qualität erfolgt durch die Middleware MW eines jeweiligen Knotens K, z.B. durch eine spezielle QoS-Analysekomponente. Alternativ kann die Ermittlung der von dem Gerätenetzwerk GENW abhängigen Datenfluss-Qualität der Applikation APP auch durch die oder eine andere Netzwerkanalyse-Komponente erfolgen.

Aus dem Kommunikationsprofil der jeweiligen Knoten K und der Datenfluss-Qualität für die Kommunikation der Applikation APP wird ein Mengengerüst MG für die Kommunikation über Publish-Verbindungen einer oder mehrerer der Datenverbindungen V der Knoten K erzeugt. Das Mengengerüst MG wird dazu verwendet, die Kommunikation über die Publish-Verbindungen einer oder mehrerer der Datenverbindungen V der Knoten K zu steuern, bei der die eine oder mehreren Datenfluss-Qualitäten pro Datenverbindungen der Applikation APP gewährleistet wird.

Das Mengengerüst MG kann beispielsweise in einem sogenannten Traffic Shaper TS (siehe Fig. 3) der Middleware MW zum Einsatz kommen, welche beispielsweise in den Netzwerken 5G oder TSN verwendet werden. Auf der Grundlage von Publish- und Subscribe-Ereignissen im Subskriptionsmanagement aller Publish-Subscribe-Komponenten, d.h. dem Kommunikationsprofil der Knoten K und der Datenfluss-Qualität für die Kommunikation der Applikation APP, kann die Middleware MW das Mengengerüst MG berechnen, die zur Bereitstellung garantierter Kommunikationseigenschaften erforderlich sind. Dies führt dazu, dass der Traffic Shaper TS die Netzwerkkonfiguration und den entsprechenden Betrieb für eine deterministische Kommunikation vorbereiten kann.

Insbesondere umfasst damit die Steuerung der Kommunikation der Publish-Verbindung einer jeweiligen Datenverbindung V der Knoten eine Formung des Netzwerkverkehrs, insbesondere durch gezieltes Verzögern des Aussendens von Datenpaketen.

Der Vorteil dieses Vorgehens ergibt sich aus dem nachfolgend beschriebenen, anschaulichen Beispiel:
In diesem Beispiel wird angenommen, dass die Applikation APP auf einem ersten Knoten fünf Datenpakete als Burst mit einer gegebenen Datenfluss-Qualität-Anforderung einer Latenzzeit von max. 20 ms übertragen möchte. In einem herkömmlichen Gerätenetzwerk würden die Datenpakete auf der Netzwerkschicht in einer Warteschlange angeordnet werden, um diese sofort zu senden. Abhängig von den definierten Regeln und dem zugrunde liegenden Setup des Gerätenetzwerks GENW erlaubt es das erfindungsgemäß vorgeschlagene Vorgehen, jedes Datenpaket mit einer Pause von beispielsweise 2 ms zwischen zwei Datenpaketen zu senden. In diesem Fall werden die QoS-Parameter immer noch erfüllt. Der Burst würde jedoch von der Netzwerkschicht nicht wahrgenommen.

Ähnliche Ausgleichsansätze werden bei einer Fehlerbehebung und bei Warteschlangenmechanismen unterer Netzwerkschichtmechanismen auf Paketebene verwendet. Keiner dieser Ansätze berücksichtigt jedoch die Parameter der Ende-zu-Ende-Datenfluss-Qualität der Verbindungen der Anwendung. Das vorgeschlagene Verfahren ermöglicht es darüber hinaus, die Kommunikationstopologie des Gerätenetzwerks und ihre Mengengerüst-Strukturen dynamisch zu definieren und zu analysieren.

Fig. 2 zeigt eine schematische Darstellung eines Knotens K des in Fig. 1 gezeigten Gerätenetzwerks GENW. Der Knoten K umfasst einen Teil der verteilten Applikation APP. Die Applikation APP stellt eine Softwarekomponente dar, die auf dem Knoten K abläuft und eine oder mehrere Teilfunktionen einer verteilten, z.B. industriellen, Gesamtanwendung realisiert. Die in Fig. 3 detaillierter gezeigte Middleware MW bedient sich zur Übertragung von Datenpaketen zwischen Teilen der Applikation APP einer Anzahl von unteren Netzwerkschichten. Der Schichtenaufbau eines Knotens K eines Gerätenetzwerks ist dem Fachmann prinzipiell bekannt, so dass lediglich eine kurze allgemeine Beschreibung erfolgt. Die eigentliche Übertragung von Datenpaketen über die Kommunikationsverbindungen/Datenverbindungen V erfolgt über die unterste Netzwerkschicht, welche, wie oben beschrieben wurde, drahtlos, z.B. mittels 5G oder 6G, oder drahtgebunden realisiert sein kann. Die zwischen der untersten Netzwerkschicht und der Middleware MW angeordneten Schichten dienen dem Transport bzw. der Vermittlung von Datenpaketen. Für den Transport der Datenpakete können bekannte Protokolle, wie TCP, UDP, DTLS oder TLS, zum Einsatz kommen. Die Vermittlung der Datenpakte kann IP-basiert erfolgen, wobei auch andere Protokolle verwendet werden können.

Wie beschrieben, nutzt die Applikation APP die Middleware MW, um mit anderen Anwendungskomponenten auf anderen Knoten K zu interagieren. Die Middleware MW, die weiter im Detail in Fig. 3 dargestellt ist, umfasst eine aus dem Stand der Technik bekannte Publish-Subscribe-Middleware PSMW. Diese stellt den Anwendungskomponenten, die für die datenzentrierte Interaktion innerhalb der verteilten Applikation APP verwendet werden, vorzugsweise eine Schnittstelle (API) und optional ein Datenmodell und/oder ein sog. Topic-Identifier-Modell zur Verfügung. Abonnements und Veröffentlichungen in einem solchen Publish-Subscribe-Gerätenetzwerk bilden ein Overlay-Netzwerk, in dem spezifische Informationsflüsse mit spezifischen Verkehrscharakteristika von verschiedenen Knoten K eingerichtet werden. Hierzu weist die Publish-Subscribe-Middleware PSMW die nachfolgenden Haupt-Unterkomponenten auf:
Ein Subskriptionsmanagement SM hält und verwaltet die Subskriptionen der verschiedenen Anwendungskomponenten des Gerätenetzwerks GENW und sorgt dafür, dass alle Subskriptionen auf dem neuesten Stand bleiben, z.B. entsprechend der Verfügbarkeit der Knoten K. Dies kann dezentral, z.B. brokerlos in DDS, oder zentral, z.B. in einer Broker-Komponente oder einem Broker-Cluster wie in MQTT, realisiert werden.

Ein Veröffentlichungsmodul PM nimmt API-Aufrufe von der Applikation APP entgegen, wobei dies typischerweise mit Hilfe der Abonnementkennung (z.B. einem Topic) und einer Nutzlast, die für diese Abonnementkennung veröffentlicht werden soll, erfolgt.

Ein Weiterleitungsmodul RT sorgt dafür, dass alle Veröffentlichungen an den richtigen Knoten K übertragen und weitergeleitet werden.

Die weiteren drei Komponenten MPS, TTA und TS sind nicht Bestandteil der Publish-Subscribe-Middleware PSMW und bezeichnen einen Middleware-Pre-Shaper MPS, die oben bereits beschriebene Verkehrs-Monitor-Komponente TTA und den eigentlichen Traffic Shaper TS.

Der Middleware-Pre-Shaper MPS stellt eine Komponente dar, welche die Datenfluss-Qualität QoS, die von der Middleware MW bereitgestellt wird, erfasst und erforderliche Eingangsinformationen für den Traffic-Shaper TS erzeugt. Insbesondere wird mit dem Middleware-Pre-Shaper MPS sichergestellt, dass das Mengengerüst MG für die Kommunikation über Publish-Verbindungen einer oder mehrerer der Datenverbindungen V der Knoten K in gewünschter Weise erzeugt wird. Hierzu verwendet der Middleware-Pre-Shaper MPS das von der Verkehrs-Monitor-Komponente TTA bereitgestellte Kommunikationsprofil sowie die QoS Datenfluss-Qualitäten der Applikation APP und die von dem Gerätenetzwerk GENW abhängige Datenverbindungs-Qualität QoS der Datenverbindungen zwischen den Geräten. Der Middleware-Pre-Shaper MPS stellt darüber hinaus sicher, dass das Mengengerüst MG für das Gerätenetzwerk GENW immer dann neu erzeugt wird, wenn zumindest eine der Datenverbindungen V entfernt wird oder neu hinzukommt. Dies kann beispielsweise bei dem Hinzukommen eines neuen Knotens K oder dem Wegfall eines Knotens K der Fall sein, aber auch unabhängig davon sein.

Mit Hilfe des Traffic-Shapers TS wird die Kommunikation in dem Gerätenetzwerk auf der Grundlage der Formung des Netzwerkverkehrs (englisch: shaping) vorbereitet. Der Traffic-Shaper TS reserviert auf der Grundlage dedizierter Eingaben Frequenzen und/oder Kanäle für die Kommunikation, um die Kommunikationsanforderungen gemäß der Datenfluss-Qualität QoS zu gewährleisten. Hierzu nimmt es die Informationen des Middleware-Pre-Shapers MPS und der Verkehrs-Monitor-Komponente TTA entgegen und optimiert optional die Konfiguration der Datenverbindungen des Gerätenetzwerks GENW. In jedem Fall führt es jedoch ein Shaping der von der Applikation APP eingehenden Daten durch, um sowohl die QoS-Anforderung zu erfüllen als auch die Stabilität der Kommunikation über die Datenverbindungen V zu unterstützen. Um dies zu erreichen, werden Flexibilitäten in den QoS-Parametern genutzt. Unter dem Shaping wird im Wesentlichen das Abarbeiten einer oder mehrerer Warteschlangen unter Einhaltung der Datenfluss-Qualität QoS der Applikation APP, z.B. durch gezieltes Verzögern des Aussendens über die Publish-Verbindung, verstanden.

Hieraus ergibt sich das beispielhaft folgende beschriebene Vorgehen. Ein Benutzer legt die Datenfluss-Qualität QoS für seine Abonnements und/oder Veröffentlichungen in den Anwendungskomponenten der Applikation APP fest. Mögliche QoS-Parameter sind beispielsweise ein Budget für eine Latenz oder eine Aktualisierungsfrequenz. Der Middleware-Pre-Shaper MPS empfängt von allen Topics Datentypen, Häufigkeit sowie die Informationen über die für die Datenübertragung verwendeten Datenverbindungen V. Genauer verarbeitet der Middleware-Pre-Shaper MPS das von der Verkehrs-Monitor-Komponente TTA bereitgestellte Kommunikationsprofil sowie die QoS Datenfluss-Qualitäten der Applikation APP und die von dem Gerätenetzwerk GENW abhängige Datenverbindungs-Qualität QoS der Datenverbindungen zwischen den Geräten. Die Verkehrs-Monitor-Komponente TTA definiert zusammen mit dem MPS ein dynamisches Modell des Datenübertragungsnetzwerks und bestimmt entsprechende Mengengerüste MG. Die Nutzlast, die die Verkehrs-Monitor-Komponente TTA von der Anwendungskomponente erhält, ebenso wie eine Datentypgröße, werden durch Abfrage von Systeminformationen erhalten. Beispielsweise beträgt für ein Datenpaket des Typs "int" die Größe 4 Byte auf einem 64-Bit-x86-System. In Kombination mit der Häufigkeit der Nutzlast, z.B. wie oft eine Veröffentlichung eines Topics stattfindet, kann die Menge für ein bestimmtes Topic berechnet werden. Beispielsweise wird eine Frequenz von 10 ms verwendet. Jede Nachricht muss nun in einen Protokollrahmen gepackt werden, wobei dies bei MQTT mit TCP 8 Byte sind. Hieraus ergibt sich eine Nutzlast von 8 Byte × 100/s = 800 Byte/s für das einzelne Topic.

Der MPS ist in der Lage, die Ziele der Nutzdaten zu analysieren. Er sammelt somit den gesamten Kommunikationsfluss und summiert diesen zum endgültigen Mengengerüst für jeden spezifischen Knoten K.

Diese Informationen werden von dem MPS und der Verkehrs-Monitor-Komponente TTA an den Traffic Shaper TS übertragen. Der Traffic Shaper TS gleicht dies dann mit den Netzwerkanforderungen und -konfigurationen ab, z.B. für 5G und/oder TSN und/oder jede andere Kommunikationstechnologie, die in der Lage ist, den Datenverkehr zwischen jedem Paar von zwei Knoten K auf der Grundlage dieser Eingangsinformationen zu gestalten. Da der Kommunikationsverkehr nun in einer optimierten und die Netzwerkschicht unterstützenden Weise erzeugt wird, sind weniger Ausfälle des Gerätenetzwerks GENW und insgesamt eine höhere Stabilität in dem Gerätenetzwerk GENW zu erwarten.

Dieses vorstehend erläuterte Verfahren ist schematisch in Fig. 4 abgebildet, wobei das erfindungsgemäße Verfahren von einer Komponente der Middleware MW durchgeführt wird. Wie dem Fachmann bekannt ist, ist die Middleware MW verteilt, wobei die das Verfahren durchführende Komponente der MW dieses für jeden Knoten durchführt.

In einem ersten Abfrageschritt ABF1 fragt die Verkehrs-Monitor-Komponente TTA der Middleware MW das Kommunikationsprofil des Knotens K ab, welches der Knoten K mittels der auf ihm implementierten Publish-Subscribe-Middleware PSMW gewinnt.

In einem Vorbereitungsschritt SAMM fasst die Netzwerkanalysekomponente die Kommunikationsprofile der Knoten K zusammen und präpariert gemeinsam mit der gegenwärtigen Konfiguration der Datenverbindungen V des Gerätenetzwerks GENW Eingangsdaten zur Berechnung eines Kommunikationsmodells.

In einem zweiten Abfrageschritt ABF2 fragt die MPS die von dem Gerätenetzwerk GENW abhängige Datenfluss-Qualität QoS der Applikation APP ab. Dabei wird eine Ende-zu-Ende-Datenfluss-Qualität der Applikation APP berücksichtigt, bei der eine Kommunikation über eine oder mehrere der Datenverbindungen V der Knoten K verläuft.

In einem Verarbeitungsschritt MGE wird ein Mengengerüst MG für die Kommunikation über Publish-Verbindungen einer oder mehrerer der Datenverbindungen V der Knoten K erzeugt.

In einem Modellierungsschritt MOD wird durch die Middleware MW die Kommunikation über die Publish-Verbindungen einer oder mehrerer der Datenverbindungen V der Knoten K vorbereitet, bei der die Datenfluss-Qualität QoS der Applikation APP gewährleistet wird.

In dem Netzwerkformungsschritt NWF erfolgt die Kommunikation in der vorab ermittelten optimierten und die Netzwerkschicht unterstützenden Weise.

Das beschriebene Verfahren ermöglicht eine deterministische Kommunikation über das Gerätenetzwerk GENW auf der Grundlage von Mechanismen zur Verkehrsgestaltung (Traffic Shaping). Das Verfahren kann für die Echtzeitkommunikation über das Gerätenetzwerk zwischen Knoten K verwendet werden. Das Verfahren kann sowohl für statische Kommunikations-Szenarien verwendet werden, bei denen das Kommunikationsprofil von Anwendungsknoten im Laufe der Zeit stabil bleibt, als auch für hochdynamische Szenarien, bei denen sich das Verkehrsprofil einer Anwendung ständig ändert und nicht im Voraus analysiert werden kann. Insgesamt wird eine höhere Stabilität und bessere Vorhersagbarkeit der Netzschichten ermöglicht, da das zuvor unbekannte Verhalten der datenzentrischen Anwendung und ihre QoS-Anforderungen berücksichtigt werden, um optimale Verkehrsprofile zu senden, die den zugrunde liegenden Netztechnologien entsprechen und gleichzeitig die Anforderungen der Anwendung erfüllen.

Unabhängig vom grammatikalischen Geschlecht eines bestimmten Begriffes sind Personen mit männlicher, weiblicher oder anderer Geschlechteridentität mit umfasst.

## Patentansprüche

1. Verfahren zum rechnergestützten Betreiben von mindestens einer verteilten datenzentrischen Applikation (APP) in einem Gerätenetzwerk (GENW) mit mehreren mittels Datenverbindungen (V) miteinander verbundenen Knoten (K) mittels Publish-Subscribe-Kommunikation, bei dem
- jeweils zumindest ein Kommunikationsprofil der Publish-Subscribe-Kommunikation der jeweiligen Knoten (K) und eine von dem Gerätenetzwerk (GENW) abhängige Datenfluss-Qualität für die Kommunikation der Applikation (APP) ermittelt werden,
- aus dem Kommunikationsprofil der Knoten (K) und der Datenfluss-Qualität für die Kommunikation der Applikation (APP) ein Mengengerüst (MG) für die Kommunikation über Publish-Verbindungen einer oder mehrerer der Datenverbindungen (V) der Knoten (K) erzeugt wird, und
- abhängig von dem Mengengerüst (MG) die Kommunikation über die Publish-Verbindungen einer oder mehrerer der Datenverbindungen (V) der Knoten (K) gesteuert wird, bei der die Datenfluss-Qualität der Applikation (APP) gewährleistet wird.

2. Verfahren nach Anspruch 1, bei dem die Steuerung der Kommunikation der Publish-Verbindung einer jeweiligen Datenverbindung (V) der Knoten (K) eine Formung des Netzwerkverkehrs, insbesondere durch gezieltes Verzögern des Aussendens von Datenpaketen, umfasst.

3. Verfahren nach Anspruch 1 oder 2, bei dem das Mengengerüst (MG) für das Gerätenetzwerk (GENW) neu erzeugt wird, wenn in dem Gerätenetzwerk (GENW) zumindest ein Knoten (K) entfernt wird oder neu hinzukommt.

4. Verfahren nach einem der vorhergehenden Ansprüche, bei dem das Mengengerüst (MG) für das Gerätenetzwerk (GENW) neu erzeugt wird, wenn zumindest eine Datenverbindung (V) entfernt wird oder neu hinzukommt.

5. Verfahren nach einem der vorhergehenden Ansprüche, bei dem die Datenverbindungen (V) drahtbasierte Verbindungen und/oder drahtlose Verbindungen, insbesondere 5G- und/oder 6G-Verbindungen, umfassen.

6. Verfahren nach einem der vorhergehenden Ansprüche, bei dem die Publish-Subscribe-Kommunikation gemäß dem DDS-Standard und/oder gemäß dem MQTT-Standard realisiert ist.

7. Verfahren nach einem der vorhergehenden Ansprüche, bei dem die Datenfluss-Qualität der Applikation (APP) eine Ende-zu-Ende-Datenfluss-Qualität der Applikation (APP) ist, wobei eine Kommunikation über eine oder mehrere der Datenverbindungen (V) der Knoten (K) verläuft.

8. Verfahren nach einem der vorhergehenden Ansprüche, bei dem abhängig von den Kommunikationsprofilen der Knoten (K) ein Kommunikationsmodell des Gerätenetzwerks (GENW) bestimmt wird und abhängig von dem Kommunikationsmodell das Mengengerüst (MG) für die Kommunikation über die Publish-Verbindungen einer oder mehrerer der Datenverbindungen (V) mittels eines neuronalen Netzes bestimmt wird.

9. Verfahren nach einem der vorhergehenden Ansprüche, bei dem die Kommunikationsprofile der Knoten (K) und die Datenfluss-Qualität der Applikation (APP) Eingangsdaten für das neuronale Netz bilden.

10. Computerprogrammprodukt, umfassend Befehle, die bei der Ausführung des Programms durch einen Computer diesen veranlassen, das Verfahren nach einem der vorhergehenden Ansprüche auszuführen.

11. Gerätenetzwerk, umfassend miteinander in Kommunikationsverbindung (V) stehende Knoten (K), auf welchem mindestens eine verteilte, mittels Publish-Subscribe-Kommunikation realisierte, datenzentrische Applikation (APP) implementiert ist, wobei das Gerätenetzwerk (GENW) oder ein jeweiliger Knoten (K) eine als Hardware und/oder als Software realisierte Analyse- und Konfigurationskomponente aufweist, welche dazu ausgebildet und eingerichtet ist, ein Verfahren nach einem der vorhergehenden Ansprüche auszuführen.
